(19) Europäisches Patentamt
European Patent Office
Office européen des brevets

(11) EP 0 723 968 A2

# (12) EUROPÄISCHE PATENTANMELDUNG

(43) Veröffentlichungstag:
**31.07.1996 Patentblatt 1996/31**

(51) Int. Cl.[6]: **C07F 9/165**, C07F 9/40, C07F 9/30

(21) Anmeldenummer: **96100403.3**

(22) Anmeldetag: **12.01.1996**

(84) Benannte Vertragsstaaten:
**DE FR GB NL**

(30) Priorität: **25.01.1995 DE 19502197**

(71) Anmelder: **BAYER AG**
**51368 Leverkusen (DE)**

(72) Erfinder:
- **Holzner, Christoph, Dr.**
  **D-51061 Köln (DE)**
- **Schlak, Ottfried, Dr.**
  **D-51061 Köln (DE)**
- **Grizan, Rosemarie**
  **D-51373 Leverkusen (DE)**
- **Jezierski, Johannes**
  **D-51377 Leverkusen (DE)**

## (54) Verfahren zur Herstellung von Thiophosphorsäure-O,O'diestern und ihrer Salze sowie deren Verwendung

(57) Die vorliegende Erfindung betrifft ein Verfahren zur Herstellung von Thiophosphorsäure-O,O'-diestern, Thiophosphonsäure-O-monoestern oder Thiophosphinsäuren und ihrer Salze, aus Phosphorigsäurediestern, Phosphonigsäuremonoestern oder Phosphinigsäuren und Schwefel sowie die Verwendung der nach diesem Verfahren hergestellten wäßrigen Salzlösungen.

EP 0 723 968 A2

## Beschreibung

Die vorliegende Erfindung betrifft ein Verfahren zur Herstellung von Thiophosphorsäure-O,O'-diestern, Thiophosphonsäure-O-monoestern oder Thiophosphinsäuren und ihrer Salze, aus Phosphorigsäurediestern, Phosphonigsäuremonoestern oder Phosphinigsäuren und Schwefel sowie die Verwendung der nach diesem Verfahren hergestellten wäßrigen Salzlösungen.

Thiophosphorsäure-O,O'-diester der allgemeinen Formel (RO)(R'O)PS(OH) werden in der Technik zur Extraktion von Schwermetallionen aus wäßrigen Lösungen eingesetzt (G. Cote, D. Bauer; Reviews in Inorganic Chemistry, Vol. 10, Nos. 1-3, (1989), 121-144). Eine herausragende Eigenschaft der Thiophosphorsäure-O,O'-diester ist ihr besonders gutes Extraktionsvermögen für thiophile Metallionen, wie z.B. $Ag^+$ (Y. Wakui, H. Matsunaga, T. M. Suzuki; Tohoku Kogyo gijutsu shikensho hokoku, Sendai (Japan), 25, (1992), 47-51; Chemical Abstract 117 (12): 115533 c). Die chemisch verwandten Thiophosphonsäure-O-monoester der allgemeinen Formel (RO)R'PS(OH) und Thiophosphinsäuren der allgemeinen Formel RR'PS(OH) können zur Co/Ni-Trennung eingesetzt werden (K. C. Sole, J. B. Hiskey; Hydrometallurgy, 30, (1992), 345-365).

Thiophosphorsäure-O,O'-diester werden nach dem Stand der Technik aus den entsprechenden Phosphorigsäurediestern (R'O)(RO)PH(O) durch Reaktion mit Schwefel in Gegenwart einer wasserfreien Hilfsbase hergestellt (Methoden der Organischen Chemie (Houben-Weyl), 4. Auflage, (1964), Band 12/2, S. 602-604). Gemäß folgender Reaktionsgleichung, nach der die Base ein Proton der PH(O)-Gruppe abstrahiert,

$$(R'O)(RO)PH(O) + S + \text{Hilfsbase} \rightarrow [(R'O)(RO)P(S)(O)]^- \, [H + \text{Hilfsbase}]^+$$

entsteht zunächst ein Salz des Thiophosphorsäure-O,O'-diesters. Dieses Salz muß während der Reaktion in Lösung gehalten werden, andernfalls würde während der Reaktion ausfallendes Salz die Auflösung des im Reaktionsgemisch suspendierten Schwefels und somit eine vollständige Umsetzung behindern.

Dieses Problem wird dadurch gelöst, daß zusammen mit der wasserfreien Hilfsbase ein organisches Lösungsmittel zugegeben wird. So setzen Liu et al. zur Herstellung von Thiophosphorsäure-O,O'-di(2-ethylhexyl)ester auf 117 ml Phosphorigsäuredi(2-ethylhexyl)ester 240 ml Benzol als Lösungsmittel ein. Als Hilfsbase wird gasförmiges Ammoniak verwendet (X. Liu, Y. Ge, Y. Song; Huaxue Shiji, Band 15, (1993), Seiten 41 und 56; Chemical Abstract 119 (3): 28247 k). Dieselbe Kombination von Lösungsmittel und Hilfsbase beschreiben O. M. Frid, S. N. Ryabchenko, I. S. Levin in Izvestija Sibirskogo Otdelenija Akademii Nauk SSR/Serija chimiceskich (Novosibirsk), Band 4, (1978), Seiten 146 bis 147; Chemical Abstract 89 (25): 215 499 t).

H. Zinke und R. Schumacher setzen zur Umsetzung von 582 g Phosphorigsäure-O,O'-diisopropylester mit Schwefel und gasförmigem Ammoniak insgesamt 1,2 l Isopropanol als Lösungsmittel ein (H. Zinke, R. Schumacher; Phosphorus, Sulfur, and Silicon, Band 63, (1991), Seiten 315 bis 322; Chemical Abstract 116 (15): 151877 f).

Eine allgemeine Herstellungsvorschrift für Thiophosphorsäure-O,O'-diester verwendet als Hilfsbase das entsprechende Natrium- oder Kaliumalkoholat und als organisches Lösungsmittel Diethylether (Methoden der Organischen Chemie (Houben-Weyl), 4. Auflage, (1964), Band 12/2, Seite 602).

Die analoge Herstellung von Thiophosphonsäure-O-monoestern aus Phosphonigsäure-O-monoestern sowie von Thiophosphinsäuren aus Phosphinigsäuren wird ebenfalls unter Verwendung von organischen Lösungsmitteln und wasserfreien Hilfsbasen beschrieben (Methoden der Organischen Chemie (Houben-Weyl), 4. Auflage, (1964), Bd. 12/2, Seiten 560 und 268).

Die Verwendung wasserfreier Hilfsbasen und organischer Lösungsmittel bei der Herstellung von Thiophosphorsaure-O,O'-diestern hat allerdings auch einige Nachteile:

So sind wasserfreie Basen entweder sehr teuer bzw. sehr aufwendig in ihrer Herstellung (wie z.B. die Na- oder K-Salze der jeweils zum Ester passenden Alkohole) oder aufwendig in ihrer Handhabung (wie z.B. das gasförmige Ammoniak).

Organische Lösungsmittel wiederum erniedrigen die Raumausbeute des Verfahrens. Sie müssen zudem nach der Umsetzung vom gewünschten Produkt wieder abgetrennt werden, da sie bei der Anwendung des Produktes - insbesondere bei der eingangs erwähnten Flüssig-flüssig-Extraktion - stören. Die Abtrennung der Lösungsmittel erfolgt durch Destillation, was zum einen zu höheren Fertigungskosten, zum anderen zu einer höheren thermischen Belastung der Thioverbindung führt, die sich während der Destillation bereits spürbar zersetzen kann.

Trotz dieser Nachteile hat man bis heute an der Verwendung wasserfreier Basen und organischer Lösungsmittel aus der Befürchtung heraus festgehalten, daß wasserhaltige Basen oder Wasser als Lösungsmittel zur Hydrolyse der Ester führen würden.

Aufgabe der vorliegenden Erfindung war es daher, ein Herstellungsverfahren für Thiophosphorsäure-O,O'-diester zur Verfügung zu stellen, welches unter Verwendung preiswerter und leicht handhabbarer Hilfsbasen ohne Einsatz organischer Lösungsmittel das gewünschte Produkt in hoher Reinheit und mit hoher Raum-Zeit-Ausbeute liefert.

Diese Aufgabe konnte durch das erfindungsgemäße Verfahren gelöst werden. Überraschenderweise wurde gefunden daß die Reaktion mit Schwefel und Base wesentlich rascher verläuft als die konkurrierende Hydrolyse der Ester, so daß der Ausschluß von Wasser völlig überflüssig ist und nur zu unnötigen Komplikationen führt.

Gegenstand der Erfindung ist ein Verfahren zur Herstellung von Thiophosphorsäure-O,O'-diestern, Thiophosphonsäure-O-monoestern oder Thiophosphinsäuren der allgemeinen Formel (R)(R')PS(OH) und ihrer Salze der allgemeinen Formel (R)(R')PS(OZ) aus den entsprechenden Phosphorigsäurediestern, Phosphonigsäuremonoestern oder Phosphinigsäuren der allgemeinen Formel (R)(R')PH(O) und Schwefel, wobei R und R' für gleiche und ungleiche Alkyl-, Alkenyl-, Cycloalkyl oder Arylgruppen mit 1 bis 18 Kohlenstoffatomen stehen, deren Wasserstoffatome ganz oder teilweise durch Halogenatome oder durch neutrale oder basische Gruppen ersetzt sein können, oder für $R_1O$- bzw. $R_1'O$-Gruppen stehen, in denen $R_1$ und $R_1'$ die gleiche Bedeutung wie R und R' haben, und Z für Alkalimetallionen, Erdalkalimetallionen, protonierte stickstoffhaltige anorganische Basen oder organische Derivate dieser stickstoffhaltigen, protonierten Basen steht, welches dadurch gekennzeichnet ist daß die Umsetzung in Gegenwart einer wäßrigen Lösung einer Hilfsbase durchgeführt wird.

Das erfindungsgemäße Verfahren kann zur Herstellung von Thiophosphorsäure-O,O'-diestern oder ihrer Salze aus Phosphorigsäurediestern, von Thiophosphonsäure-O-monoestern oder ihrer Salze aus Phosphonigsäuremonoestern sowie zur Synthese von Thiophosphinsäuren oder ihrer Salze aus Phosphinigsäuren unter Zugabe von Schwefel und Einsatz von wäßriger Hilfsbase herangezogen werden. Das nachfolgende Schema verdeutlicht den Ablauf der Umsetzungen und die chemische Struktur der jeweiligen Einsatzstoffe und Produkte.

$$(R_1O)(R_1'O)PH(O) \xrightarrow[\text{wäßr.Hilfsbase}]{\text{Schwefel}} (R_1O)(R_1'O)PS(OH)/(R_1O)R_1'O)PS(OZ)$$

Phosphorigsäurediester → Thiophosphorsäure-O,O'-diester/Salz

$$(R_1O)R'PH(O) \xrightarrow[\text{wäßr.Hilfsbase}]{\text{Schwefel}} (R_1O)R'PS(OH)/(RO)R'PS(OZ)$$

Phosphonigsäuremonoester → Thiophosphonsäure-O-monoester/Salz

$$RR'PH(O) \xrightarrow[\text{wäßr.Hilfsbase}]{\text{Schwefel}} RR'PS(OH)/RR'PS(OZ)$$

Phosphinigsäure → Thiophosphinsäure/Salz

Die Reste R, R', $R_1$ und $R_1'$ bedeuten vorzugsweise gleiche oder ungleiche Alkyl-, Alkenyl-, Cycloalkyl- oder Arylreste mit 1 bis 18 Kohlenstoffatomen. Die Wasserstoffatome dieser Alkyl-, Alkenyl-, Cycloalkyl- oder Arylreste können bevorzugt teilweise oder vollständig durch andere Atome, wie z.B. Halogenatome, oder durch neutrale oder basische funktionelle Gruppen, wie z.B. Hydroxy-, Alkoxy-, Carbalkoxy- oder Aminogruppen, ersetzt sein. Besonders bevorzugte Reste für R, R', $R_1$ und $R_1'$ sind 2-Ethylhexyl, n-Butyl, n-Octyl und 2,4,4-Trimethylpentyl.

Der Rest Z bedeutet vorzugsweise ein Alkalimetall (besonders bevorzugt Natrium und Kalium), ein Erdalkalimetall (besonders bevorzugt Magnesium und Calcium), eine protonierte stickstoffhaltige anorganische Base (besonders bevorzugt $NH_4^+$ und $H_2N\text{-}NH_3^+$) oder ein organisches Derivat dieser stickstoffhaltigen protonierten Base (besonders bevorzugt $NR^2R^3R^4H^+$ und $R^2R^3C = NR^4H^+$ und $R^2R^3C{=}N\text{-}NR^4R^5H^+$ mit $R^2$, $R^3$, $R^4$ und $R^5$ gleiche oder verschiedene Alkyl-, Cycloalkyl- oder Arylreste mit 1-10 Kohlenstoffatomen oder Wasserstoffatome).

Als wäßrige Hilfsbasen werden bevorzugt Lösungen von Alkali- oder Erdalkalihydroxiden eingesetzt oder wäßrige Lösungen basischer Stickstoffverbindungen, wie z.B. wie Ammoniak, Hydrazin, Amine, Imine oder Hydrazone.

Bevorzugt wird die Hilfsbase als 5 - 95 %ige, besonders bevorzugt als 5 - 60 %ige wäßrige Lösung eingesetzt, wobei möglichst konzentrierte Lösungen besonders bevorzugt sind. Je nach Art der verwendeten Base kann die bevorzugte Konzentration in einem sehr weiten Bereich schwanken. Ammoniakwasser läßt sich bei Raumtemperatur und Atmosphärendruck beispielsweise nur in einer maximalen Konzentration von 34 % handhaben, Trimethylaminlösung dagegen schon in einer Konzentration von 45 %. Dimethylamin ist unbegrenzt mischbar mit Wasser. Organische Basen, die eine Mischungslücke mit Wasser aufweisen, wie z.B. Triethylamin können auch als wassergesättigte Base, d.h. als Lösung von Wasser in der Base eingesetzt werden.

Die Hilfsbase verbleibt bevorzugt nach der Reaktion in Form ihrer konjugierten Säure im hergestellten Produkt und liefert das positiv geladene Gegenion zum Anion der hergestellten Thio-Säure. Die bevorzugte Wahl der Hilfsbase richtet sich daher zweckmäßigerweise danach, welches Salz der Thio-Säure hergestellt werden soll. Wird ein spezielles Aminsalz der Thio-Säure gewünscht, wählt man als Hilfsbase entsprechend dieses spezielle Amin aus.

Ist das Salz der Thio-Säure dagegen nur Zwischenprodukt für die Herstellung der freien Säuren, ist als Hilfsbase eine wäßrige Ammoniaklösung oder Trimethylaminlösung zu bevorzugen. Die freien Säuren werden einfach durch nachträgliche Zugabe wäßriger Mineralsäuren zum Reaktionsgemisch hergestellt.

Bevorzugt werden Schwefel und Hilfsbase, bezogen auf die Phosphorkomponente, im Überschuß eingesetzt.

Das Molverhältnis der Einsatzstoffe sollte besonders bevorzugt so gewählt werden, daß auf 1 Mol Phosphorverbindung 1 bis 2 Mol Schwefel und 1 bis 1,5 Mol Base zum Einsatz kommen.

Ein Schwefelüberschuß ist deshalb zu bevorzugen, weil so auch die letzten Reste der eingesetzten Phosphorverbindung zügig und vollständig zum gewünschten Produkt abreagieren. Der überschüssige Schwefel kann nach der Reaktion abfiltriert und ohne weitere Reinigung beim nächsten Ansatz erneut eingesetzt werden.

Der günstige Einfluß des bevorzugten Basenüberschusses läßt sich damit erklären, daß alle PH(O)-haltigen Phosphorverbindungen in der Praxis auch Verunreinigungen an stärker sauren Verbindungen mit P(O)(OH)-Gruppen enthalten. Diese Verunreinigungen können einen Teil der eingesetzten Hilfsbase neutralisieren und somit der eigentlichen Reaktion entziehen.

Das in der wäßrigen Hilfsbase enthaltene Wasser zeigt überraschenderweise keinen negativen Einfluß auf die Reaktion, obwohl insbesondere bei den Phosphorigsäurediestern, die zwei hydrolysierbare Alkoxygruppen am P-Atom tragen, zu erwarten war, daß in Gegenwart von Wasser Hydrolyse unter Bildung der oben erwähnten sauren PO(OH)-Verbindungen eintritt. Es zeigte sich, daß die Reaktion mit Schwefel und Hilfsbase anscheinend rascher als die konkurrierende Hydrolyse verläuft.

Unter den geeigneten Reaktionsbedingungen, die abhängig von den eingesetzten Ausgangsverbindungen sind, läßt sich die Reaktion so durchführen, daß die Hydrolyse praktisch keine Rolle spielt. Geeignete Reaktionsbedingungen bedeuten hierbei bevorzugt, daß Schwefel und Hilfsbase vorzugsweise im Überschuß eingesetzt werden, daß die Hilfsbase bevorzugt in möglichst konzentrierter Lösung und bevorzugt möglichst in kurzer Zeit zum Gemisch aus P-Verbindung und Schwefel gegeben wird oder daß umgekehrt die P-Verbindung bevorzugt zu einem Gemisch aus wäßriger Hilfsbase und Schwefel gegeben wird.

Die Temperatur während der Reaktion liegt bevorzugt zwischen 0 und 60°C. Da die gewünschte Reaktion stark exotherm ist, wird dieser Temperaturbereich durch Kühlung aufrechterhalten.

Das in der eingesetzten Hilfsbase enthaltene Wasser hat nicht nur keinen negativen Effekt auf die gewünschte Umsetzung, sondern es hat auch noch einen zusätzlichen positiven Einfluß. Es fungiert nämlich als Lösungsmittel für das entstandene Salz der Thio-Säure und ersetzt dadurch das nach dem Stand der Technik notwendige organische Lösungsmittel. Aufgrund seiner höheren Polarität ersetzt Wasser bereits in kleinen Mengen ein wesentlich größeres Volumen an unpolareren organischen Lösungsmitteln.

Ein weiterer Vorteil des erfindungsgemäßen Verfahrens ist die Einsparung an Reaktionsvolumen, was gleichbedeutend mit einer höheren Raumausbeute ist. Darüber hinaus stört das Wasser auch nicht bei der wichtigsten Anwendung der Thio-Säuren, der Flüssig-flüssig-Extraktion. Ein aus Phosphorigsäure-O,O'-di(2-ethylhexyl)ester, Schwefel und Ammoniakwasser erhaltenes Reaktionsgemisch kann beispielsweise nach Abfiltrieren des überschüssigen Schwefels direkt zur Flüssig-flüssig-Extraktion eingesetzt werden. Außerdem kann die vom Schwefel befreite Reaktionsmischung auch mit einem nicht wassermischbaren Verdünnungsmittel, wie beispielsweise in einem aliphatischen oder aromatischen Kohlenwasserstoff oder in einem langkettigen aliphatischen Alkohol, wie Isodecanol, oder in Gemischen hiervon, abgemischt werden. Die so erhaltene Mischung wirkt beim Kontaktieren mit einer wäßrigen Metallsalzlösung als Extraktionsmittel für Metallionen.

Soll das Wasser nach der Umsetzung entfernt werden, so geschieht dies zweckmäßigerweise während der Umwandlung des Salzes in die freie Säure. Das Reaktionsgemisch wird beispielsweise einfach mit überschüssiger wäßriger Schwefelsäure versetzt. Die beispielsweise dabei entstehende Di(2-ethylhexyl)thiophosphorsäure scheidet sich als organische Phase ab. Das gesamte Wasser sammelt sich in der wäßrigen, schwefelsauren Phase an und kann durch Phasentrennung entfernt werden.

Das Wasser kann also, falls gewünscht, durch eine einfache Phasentrennung bei Raumtemperatur entfernt werden.

Durch den Verzicht auf eine Lösungsmitteldestillation, wie bei den bisher bekannten Verfahren, unterbleibt dadurch die thermische Belastung der freien Thio-Säure. Dadurch steigt außerdem die Produktreinheit deutlich an. Weiterhin führt der Verzicht auf eine Destillation zu Zeit- und Kosteneinsparung.

Ein weiterer zusätzlicher Vorteil des erfindungsgemäßen Verfahrens sind der niedrige Preis und die leichte Handhabbarkeit der eingesetzten wäßrigen Basen. So läßt sich beispielsweise eine 25 %ige Ammoniaköslung einfacher und gefahrloser dosieren als flüssiges oder gasförmiges Ammoniak.

Die Erfindung soll anhand der nachfolgenden Beispiele näher erläutert werden.

**Beispiel 1**

**Herstellung von Thiophosphorsäure-O,O'-diethylester-Ammoniumsalz (Ammonium-O,O'-diethylthiophosphat)**

In einem Reaktionskolben werden 414 g (3 Mol) Phosphorigsäure-O,O'-diethylester (Diethylphosphit) und 192 g (6 Mol) gemahlener Schwefel vorgelegt. Unter Rühren und unter Eiskühlung werden innerhalb von 15 Minuten 255,5 g (3,75 Mol) 25 %iges Ammoniakwasser zugetropft. Die Innentemperatur beträgt <40°C. Man läßt 2,5 Stunden nachrühren und filtriert vom überschüssigen Schwefel ab. Eine $^{31}$P-NMR-Analyse des Filtrats zeigt das gewünschte Ammonium-O,O'-diethylthiophosphat. Die Ausbeute beträgt 92 % der Theorie.

**Beispiel 2**

**Herstellung von Thiophosphorsäure-O,O'-dibutylester (O,O'-Dibutylthiophosphorsäure)**

In einem Reaktionskolben werden 583 g (3 Mol) Phosphorigsäure-O,O'-dibutylester (Dibutylphosphit) und 192 g (6 Mol) gemahlener Schwefel vorgelegt. Unter Rühren und unter Eiskühlung werden innerhalb von 25 Minuten 225 g (3,3 Mol) 25 %iges Ammoniakwasser zugetropft. Die Innentemperatur beträgt 36-40°C. Nach der Ammoniakzugabe wird noch 2,5 Stunden bei dieser Temperatur nachgerührt. Nach Zugabe von 125 ml Wasser wird der Schwefel abfiltriert. Das Filtrat wird mit 674 g (3,3 Mol) 48 %iger Schwefelsäure 15 Minuten lang gerührt. Nach der Phasentrennung scheidet sich die O,O'-Dibutylthiophosphorsäure als leichtere Phase von der wäßrigen Schwefelsäure-Ammoniumhydrogensulfat-Lösung ab. Bei zwei nachfolgenden Wäschen mit je 500 ml Wasser scheidet sich das Produkt dagegen als schwerere Phase ab. Das Produkt kann nach der letzten Phasentrennung zur Entfernung von Restwasser noch 25 Minuten lang unter vermindertem Druck (20 mbar) bei 60°C erhitzt werden. Das $^{31}$P-NMR-Spektrum der gelblich klaren Flüssigkeit zeigt die gewünschte O,O'-Dibutylthiophosphorsäure. Die Ausbeute nach Entwässern beträgt 95 % der Theorie.

**Beispiel 3**

**Herstellung von Thiophosphorsäure-O,O'-di(2-ethylhexyl)ester-Trimethylammoniumsalz (Trimethylammonium-O,O'-di(2-ethylhexyl)thiophosphat)**

In einem Reaktionskolben werden 278 g (0,908 Mol) Phosphorigsäure-O,O'-di(2-ethylhexyl)ester (Di(2-ethylhexyl)phosphit) und 29,1 g (0,908 Mol) Schwefel vorgelegt. Zu der Suspension werden unter Rühren und unter Kühlung innerhalb von 40 Minuten 131 g (1 Mol) 45 %ige wäßrige Trimethylaminlösung zugetropft.

Die Temperatur während der Aminzugabe sollte zwischen 35 und 40°C liegen. Nach 3 Stunden Nachrühren bei derselben Temperatur wird von eventuell ungelösten Schwefelresten abfiltriert. Ein $^{31}$P-NMR-Spektrum des Filtrats zeigt das gewünschte Trimethylammonium-O,O'-di(2-ethylhexyl)thiophosphat. Die Ausbeute beträgt 98 % der Theorie.

**Beispiel 4**

**Herstellung von Thiophosphorsäure-O,O'-di(2ethylhexyl)ester (O,O'-Di(2-ethylhexyl)thiophosphorsäure)**

In einem Reaktionskolben werden 368 g (1,2 Mol) Phosphorigsäure-O,O'-di(2-ethylhexyl)ester (Di(2-ethylhexylphosphit) und 58 g (1,8 Mol) Schwefel vorgelegt. Zu der Suspension werden unter Rühren und unter Kühlung innerhalb von 1 Stunde 102 g (1,5 Mol) 25 %iges Ammoniakwasser gegeben. Die Innentemperatur während der Ammoniakzugabe liegt bei 35-43°C. Nach der Ammoniakzugabe wird noch 3 Stunden bei dieser Temperatur nachgerührt. Anschließend werden 337 g (1,65 Mol) 48 %ige Schwefelsäure zugegeben. Nach dem Abfiltrieren des überschüssigen Schwefels werden die Phasen getrennt. O,O'-Di(2-ethylhexyl)thiophosphorsäure scheidet sich als leichtere Phase ab. Diese wird noch zweimal mit je 4,8 %iger Schwefelsäure gewaschen. Reste an wäßriger Phase, die zur Eintrübung der organischen Phase führen, können durch Filtration oder durch Abdampfen im Vakuum entfernt werden. Das $^{31}$P-NMR-Spektrum der gelblich klaren Flüssigkeit zeigt die gewünschte O,O'-Di(2-ethylhexyl)thiophosphorsäure. Die Ausbeute beträgt 96 % der Theorie.

**Patentansprüche**

1. Verfahren zur Herstellung von Thiophosphorsäure-O,O'-diestern der allgemeinen Formel

$$(RO)(R'O)PS(OH)$$

und ihrer Salze der allgemeinen Formel

(RO)(R'O)PS(OZ),

wobei

R und R' für gleiche oder ungleiche Alkyl-, Alkenyl-, Cycloalkyl- oder Arylgruppen mit 1 bis 18 Kohlenstoffatomen stehen, deren Wasserstoffatome ganz oder teilweise durch Halogenatome oder durch neutrale oder basische Gruppen ersetzt sein können, und

Z für Alkalimetallionen, Erdalkalimetallionen, protonierte stickstoffhaltige anorganische Basen oder organische Derivate dieser stickstoffhaltigen, protonierten Basen steht,

aus den entsprechenden Phosphorigsäurediestern der allgemeinen Formel

(RO)(R'O)PH(O),

wobei

R und R' die gleiche Bedeutung wie oben haben,

und Schwefel, dadurch gekennzeichnet, daß die Umsetzung in Gegenwart einer wäßrigen Lösung einer Hilfsbase durchgeführt wird.

2. Verfahren nach Anspruch 1, dadurch gekennzeichnet, daß als Hilfsbase ein Hydroxid der Alkalimetalle oder Erdalkalimetalle, eine stickstoffhaltige anorganische Base oder ein organisches Derivat dieser stickstoffhaltigen Base eingesetzt wird.

3. Verfahren nach Anspruch 1, dadurch gekennzeichnet daß die wäßrige Lösung eine Konzentration von 5 - 60 % aufweist.

4. Verfahren nach Anspruch 1, dadurch gekennzeichnet, daß bezogen auf die Phosphorverbindung, ein Schwefelüberschuß eingesetzt wird.

5. Verfahren nach Anspruch 1, dadurch gekennzeichnet, daß bezogen auf die Phosphorverbindung, ein Überschuß an Hilfsbase eingesetzt wird.

6. Verfahren nach einem der Ansprüche 1 bis 5, dadurch gekennzeichnet, daß die Temperatur während der Umsetzung bei 0 bis 60°C liegt.

7. Verfahren nach Anspruch 1, dadurch gekennzeichnet, daß 1 Mol Phosphorigsäuredi(2-ethylhexyl)ester mit 1,25 bis 1,5 Mol Schwefel und 1,1 bis 1,25 Mol einer Hilfsbase in wäßriger Lösung bei einer Temperatur zwischen 35 und 43°C umgesetzt wird.

8. Verfahren nach Anspruch 7, dadurch gekennzeichnet, daß als Hilfsbase in wäßriger Lösung wäßriges Ammoniak oder eine wäßrige Trimethylaminlösung eingesetzt wird.

9. Verwendung der nach dem Verfahren gemäß Anspruch 1 bis 8 hergestellten Salze (RO)(R'O)PS(OZ) in wäßriger Lösung nach Abfiltrieren des überschüssigen Schwefels zusammen mit nicht wassermischbaren, organischen Lösungsmitteln als Extraktionsmittel für Metallionen und andere Kationen.